# EUROPÄISCHE PATENTSCHRIFT

(11) **EP 4 554 840 B1**
(45) Veröffentlichungstag und Bekanntmachung des Hinweises auf die Patenterteilung: **09.09.2026**
(21) Anmeldenummer: 23739522.3
(22) Anmeldetag: 06.07.2023
(51) Int. Cl.: B62D 25/00, B62D 29/00

(54) **VORRICHTUNG ZUR VERSTÄRKUNG EINES STRUKTURELEMENTES**
DEVICE FOR REINFORCING A STRUCTURAL ELEMENT
DISPOSITIF DE RENFORCEMENT D'UN ÉLÉMENT STRUCTURAL

(30) Priorität: 14.07.2022 EP 22185050
(43) Veröffentlichungstag der Anmeldung: 21.05.2025
(73) Patentinhaber: Sika Technology AG, 6340 Baar (CH)
(72) Erfinder: NIEZUR, Michael, Southfield, Michigan 48076 (US); ROBERTSON, Taylor, Oxford, Michigan 48371 (US)
(74) Vertreter: Sika Patent Attorneys
(86) Internationale Anmeldenummer: PCT/EP2023/068728
(87) Internationale Veröffentlichungsnummer: WO 2024/012984

(56) Entgegenhaltungen:
- EP-A1- 3 750 681
- WO-A1-03/020574
- US-A1- 2013 133 771

## Beschreibung

Die Erfindung betrifft eine Vorrichtung zur Verstärkung eines Strukturelementes sowie ein System eines verstärkten Strukturelementes in einem Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (englisch: baffle) verwendet, um Hohlräume abzudichten und/oder akustisch abzuschotten, oder Verstärkungselemente (englisch: reinforcer) verwendet, um Hohlräume zu verstärken. Vorrichtungen zur Verstärkung sind beispielsweise aus US 2013/133771 bekannt.

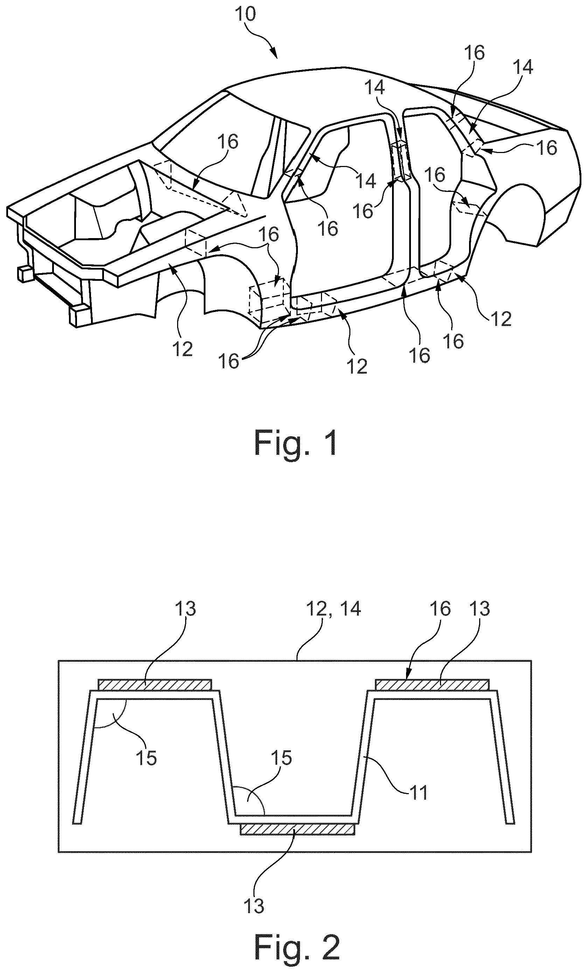

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12, auf. Solche Strukturelemente 12, 14 mit Hohlräumen werden üblicherweise mit Abdichtungs- und/oder Verstärkungselementen 16 abgedichtet bzw. verstärkt.

In Fig. 2 ist schematisch ein bekanntes Konzept zum Abdichten und/oder Verstärken von solchen Strukturelementen mit Hohlräumen in Kraftfahrzeugen dargestellt. Dabei zeigt die Fig. 2 ein Verstärkungselement 16 in einem Strukturelement 12, 14 vor einer Expansion eines expandierbaren Materials 13. In diesem Beispiel ist das expandierbare Material 13 auf Oberflächen eines Trägerelementes 11 angeordnet, welche in einer Nähe zum Strukturelement 12, 14 angeordnet sind. Das Trägerelement 11 weist in diesem Ausführungsbeispiel einen M- bzw. W-förmigen Querschnitt auf. Dadurch wird eine Steifigkeit des Trägerelementes 11 erhöht.

Dieses Trägerelement 11 bzw. das Verstärkungselement 16 gemäss dem Stand der Technik ist im Querschnitt derart ausgebildet, dass es auf einfache Art und Weise im Spritzgussverfahren hergestellt werden kann. Hierzu sind benachbarte Flächen des Trägerelementes 11 mit einem Winkel 15 ausgebildet, welcher geringfügig grösser als 90° ist. Durch eine solche Ausgestaltung des Querschnittes des Trägerelementes 11 kann das spritzgegossene Trägerelement 11 einfach von der Form der Spritzgussmaschine abgezogen werden.

Eine Oberfläche des Trägerelementes 11, welche jeweils einer Innenseite des Strukturelementes 12, 14 zugewandt ist, weist typischerweise eine schachbrettartige Form auf. Dabei kann das Verbindungsmaterial bzw. das expandierbare Material 13 jeweils nur auf Flächen angeordnet werden, welche in der Nähe des Strukturelementes 12, 14 angeordnet sind.

Nachteilig an solchen Verstärkungselementen 16 ist es, dass das Trägerelement 11 nicht auf optimale Art und Weise mit dem Strukturelement 12, 14 verbunden werden kann, weil hierzu nicht genügend Oberflächen des Trägerelementes 11 zur Verfügung stehen, welche sich in der Nähe des Strukturelementes 12, 14 befinden und sich dadurch zur Anbringung von Verbindungsmaterial 13 eignen.

Der Erfindung liegt daher die Aufgabe zugrunde, eine verbesserte Vorrichtung der eingangs genannten Art bereitzustellen, welche erlaubt, den Träger besser mit dem Strukturelement zu verbinden. Zudem soll die Vorrichtung kosteneffizient und einfach herzustellen sein.

Diese Aufgabe wird gelöst durch eine Vorrichtung zur Verstärkung eines Strukturelementes in einem Kraftfahrzeug, umfassend: einen ersten Träger, welcher eine Aussenseite mit einer mehrheitlich geschlossenen Oberfläche hat und eine Innenseite mit einer mehrheitlich durch Rippen definierte Oberfläche hat, wobei auf der geschlossenen Oberfläche der Aussenseite zumindest teilweise ein erstes expandierbares Material angeordnet ist; einen zweiten Träger, welcher eine Aussenseite mit einer mehrheitlich geschlossenen Oberfläche hat und eine Innenseite mit einer mehrheitlich durch Rippen definierte Oberfläche hat, wobei auf der geschlossenen Oberfläche der Aussenseite zumindest teilweise ein zweites expandierbares Material angeordnet ist; wobei der erste Träger und der zweite Träger derart miteinander verbunden sind, dass die Innenseiten der Träger einander zugewandt sind; und wobei die Aussenseiten der Träger in einem Verwendungszustand jeweils gegen eine Wand des Strukturelementes gerichtet sind, sodass das erste expandierbare Material und das zweite expandierbare Material nach einer Expansion die Träger mit Wänden des Strukturelements verbinden.

Diese Lösung hat den Vorteil, dass dadurch eine markant bessere Verbindung des Trägers mit dem Strukturelement erreicht werden kann. Durch die geschlossene bzw. im Wesentlichen geschlossene Oberfläche des Trägerelementes bietet sich die Möglichkeit, Klebstoff flächendeckend beidseitig des Trägers anzuordnen und somit den Träger mit dem Strukturelement besser zu verbinden. Dadurch können wesentlich bessere Verstärkungen von Hohlräumen erzielt werden im Vergleich zu Vorrichtungen gemäss dem Stand der Technik.

Ein Kerngedanke der vorliegenden Erfindung besteht darin, dass durch das Vorsehen von zwei Trägern, welche miteinander verbunden sind, eine neuer Gesamtträger bereitgestellt werden kann, welcher viel Anbindungsfläche für Klebstoff bietet, um diesen Gesamtträger mit dem Strukturelement zu verbinden. Dabei können die Träger gewissermassen modular zusammengestellt werden. Dadurch kann eine solche Vorrichtung der jeweiligen Situation ideal angepasst werden.

In einer beispielhaften Ausführungsform ist das zweite expandierbare Material des zweiten Trägers derart in einem Randbereich der Aussenseite angeordnet, dass das zweite expandierbare Material bei einer Expansion sowohl den zweiten Träger mit einer Wand des Strukturelementes als auch mit der Innenseite des ersten Trägers verbindet

Dies hat den Vorteil, dass dadurch eine mechanisch belastbare Verbindung zwischen den Trägern entsteht, nachdem das zweite expandierbare Material expandiert ist.

In einer beispielhaften Weiterbildung ist das zweite expandierbare Material auf zumindest 40%, insbesondere auf zumindest 50%, insbesondere auf zumindest 60%, insbesondere auf zumindest 70%, insbesondere auf zumindest 80% des Randbereiches der Aussenseite angeordnet.

Dies hat den Vorteil, dass dadurch eine grössere Fläche der beiden Träger miteinander verbunden werden kann, und/oder dass dadurch eine Verbindung auf verschiedenen Seitenflächen des zweiten Trägers mit dem ersten Träger erreicht werden kann. Beides führt zu mechanisch belastbareren Verbindungen zwischen den Trägern.

In einer beispielhaften Ausführungsform ist das zweite expandierbare Material im Randbereich der Aussenseite in einer vordefinierten Distanz und im Wesentlichen parallel zu einer Rippe des ersten Trägers angeordnet, sodass bei einer Expansion eine längliche Verbindung zwischen erstem und zweitem Träger durch das zweite expandierbare Material entsteht.

Dies hat den Vorteil, dass dadurch eine geeignete Anbindungsfläche des ersten Trägers verwendet werden kann, um eine möglichst mechanisch belastbare Verbindung zwischen den Träger zu erreichen.

In einer beispielhaften Weiterbildung beträgt die vordefinierte Distanz zwischen 0.1 mm und 5 mm, insbesondere zwischen 0,2 mm und 3 mm, insbesondere zwischen 0.2 mm und 1 mm.

In einer beispielhaften Ausführungsform ist der erste Träger grösser als der zweite Träger.

In einer beispielhaften Ausführungsform beträgt eine Fläche der Innenseite des zweiten Trägers zwischen 10 % und 80 %, insbesondere zwischen 20 % und 70 %, insbesondere zwischen 30 % und 60 % einer Fläche der Innenseite des ersten Trägers.

In einer beispielhaften Ausführungsform hat die Aussenseite des ersten Trägers und/oder des zweiten Trägers auf zumindest 70 %, insbesondere auf zumindest 75 %, insbesondere auf zumindest 80 % eine geschlossene Oberfläche.

Dies hat den Vorteil, dass dadurch eine grössere Fläche zur Anbindung an das Strukturelement zur Verfügung steht, sodass eine bessere Verstärkung erreicht werden kann.

In einer beispielhaften Ausführungsform hat die Innenseite des ersten Trägers und/oder des zweiten Trägers auf zumindest 70 %, insbesondere auf zumindest 85 %, insbesondere auf zumindest 80 % eine durch Rippen definierte Oberfläche.

In einer beispielhaften Ausführungsform sind der erste Träger und der zweite Träger durch zumindest zwei mechanische Verbindungen miteinander verbunden, wobei jeder Träger jeweils zwei Kopplungselemente umfasst, welche mechanisch verbindbar sind mit den Kopplungselementen des jeweils anderen Trägers.

Dies hat den Vorteil, dass dadurch auf kostengünstige und zuverlässige Art eine Vorfixierung der Träger zueinander erreicht werden kann.

In einer beispielhaften Ausführungsform sind die Kopplungselemente als Clips und Clipöffnungen ausgebildet.

In einer beispielhaften Ausführungsform sind die Kopplungselemente am zweiten Träger in einem Randbereich der Innenseite angeordnet, und wobei die Kopplungselemente am ersten Träger an dessen Innenseite angeordnet sind.

In einer beispielhaften Ausführungsform fixiert die mechanische Verbindung den ersten Träger und den zweiten Träger für eine Montage miteinander, aber verbindet die Träger nicht für einen vorgesehenen Lastfall mechanisch miteinander.

In einer beispielhaften Ausführungsform haben das erste expandierbare Material und das zweite expandierbare Material dieselbe Zusammensetzung.

In einer alternativen Ausführungsform haben das erste expandierbare Material und das zweite expandierbare Material nicht dieselbe Zusammensetzung, wobei sich die Materialien insbesondere durch eine unterschiedliche Expansionsrate unterscheiden.

In einer beispielhaften Ausführungsform haben das erste expandierbare Material und/oder das zweite expandierbare Material eine Expansionsrate von mehr als 100 % und von weniger als 800 %, insbesondere von mehr als 200 % und von weniger als 700 %, insbesondere von mehr als 250 % und von weniger als 600 %.

Als expandierbares Material können grundsätzlich verschiedenartige Materialien verwendet werden. Beispielsweise können folgende im Handel erhältliche Klebstoffe verwendet werden: SikaReinforcer^{®}-911, SikaReinforcer^{®}-940, SikaReinforcer^{®}-941, SikaReinforcer^{®}-942, SikaReinforcer^{®}-943, SikaReinforcer^{®}-951 und SikaReinforcer^{®}-955.

In einer beispielhaften Ausführungsform ist das erste expandierbare Material und/oder das zweite expandierbare Material durch eine Temperatur von mehr als 120° härtbar.

In einer beispielhaften Ausführungsform ist der erste Träger und/oder der zweite Träger mit dem jeweils darauf angeordneten expandierbaren Material durch ein Zweikomponenten-Spritzgussverfahren hergestellt.

Dies hat den Vorteil, dass dadurch kostengünstige Vorrichtungen hergestellt werden können.

In einer beispielhaften Ausführungsform enthält der Träger Kunststoff, faserverstärkten Kunststoff (insbesondere karbonfaserverstärkter Kunststoff oder glasfaserverstärkter Kunststoff), oder eine Kombination dieser Materialien.

Die eingangs gestellte Aufgabe wird weiterhin gelöst durch ein System eines verstärkten Strukturelementes in einem Kraftfahrzeug, wobei das System umfasst: ein Strukturelement; eine Vorrichtung nach obiger Beschreibung, wobei die Vorrichtung im Strukturelement angeordnet ist; wobei das expandierte Material die Träger mit dem Strukturelement und die Träger untereinander verbindet.

Einzelheiten und Vorteile der Erfindung werden im Folgenden anhand von Ausführungsbeispielen und mit Bezug auf schematische Zeichnungen beschrieben.

Es zeigen:
- Fig. 1: beispielhafte Darstellung einer Karosserie;
- Fig. 2: schematische Darstellung einer beispielhaften Vorrichtung gemäss dem Stand der Technik;
- Fig. 3a und 3b: schematische Darstellung eines beispielhaften ersten Trägers;
- Fig. 4a und 4b: schematische Darstellung eines beispielhaften zweiten Trägers;
- Fig. 5: schematische Darstellung einer beispielhaften Vorrichtung; und
- Fig. 6a und 6b: schematische Darstellung einer beispielhaften Vorrichtung.

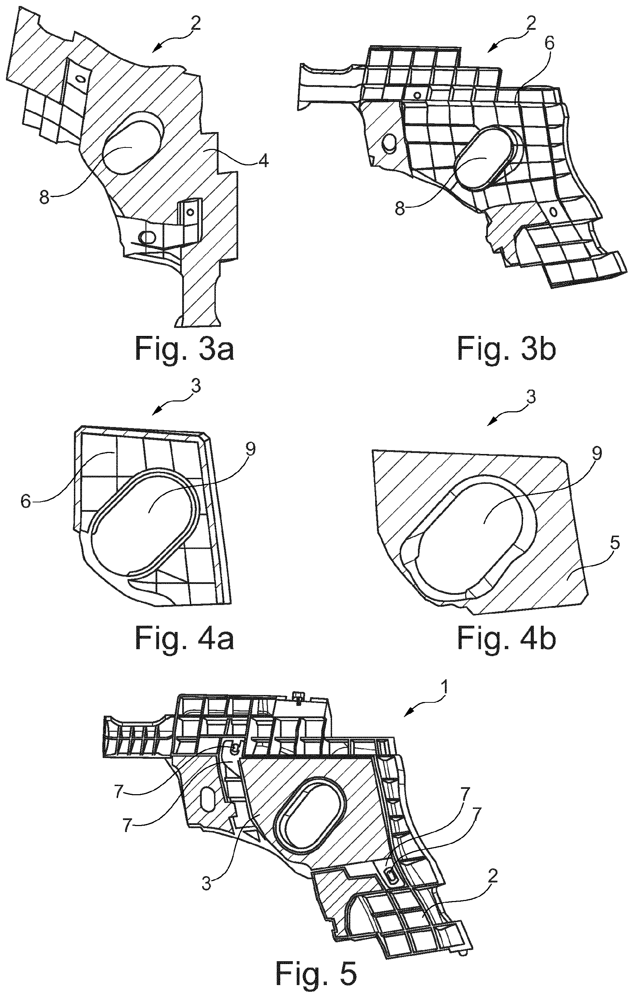

In den Fig. 3a und 3b ist ein beispielhafter erster Träger 2 dargestellt. Dabei ist in Fig. 3a die Aussenseite des ersten Trägers 2 sichtbar, welche eine mehrheitlich geschlossenen Oberfläche hat, wobei auf dieser geschlossenen Oberfläche ein erstes expandierbares Material 4 angeordnet ist. In Fig. 3b ist die Innenseite des Trägers 2 sichtbar, welche eine mehrheitlich durch Rippen 6 definierte Oberfläche hat.

In diesem Ausführungsbeispiel hat der erste Träger 2 eine erste Öffnung 8, welche sich von der Aussenseite bis zur Innenseite erstreckt.

In den Fig. 4a und 4b ist ein beispielhafter zweiter Träger 3 dargestellt. Dabei ist in Fig. 4a die Innenseite des zweiten Trägers 3 sichtbar, welche eine mehrheitlich durch Rippen 6 definierte Oberfläche hat. In Fig. 4b ist die Aussenseite des zweiten Trägers 3 sichtbar, welche eine mehrheitlich geschlossenen Oberfläche hat, wobei auf dieser geschlossenen Oberfläche ein zweites expandierbares Material 5 angeordnet ist.

In diesem Ausführungsbeispiel hat der zweite Träger 2 eine zweite Öffnung 9, welche sich von der Aussenseite bis zur Innenseite erstreckt.

In Fig. 5 ist eine beispielhafte Vorrichtung 1 dargestellt, welche sowohl den ersten Träger 2 als auch den zweiten Träger 3 umfasst. Dabei sind die Träger 2, 3 derart miteinander verbunden, dass die Innenseiten der Träger 2, 3 einander zugewandt sind.

In diesem Ausführungsbeispiel hat der erste Träger 2 und der zweite Träger 3 jeweils zwei Kopplungselemente 7, welche jeweils mechanisch mit den Kopplungselementen 7 des anderen Trägers 2, 3 verbindbar sind.

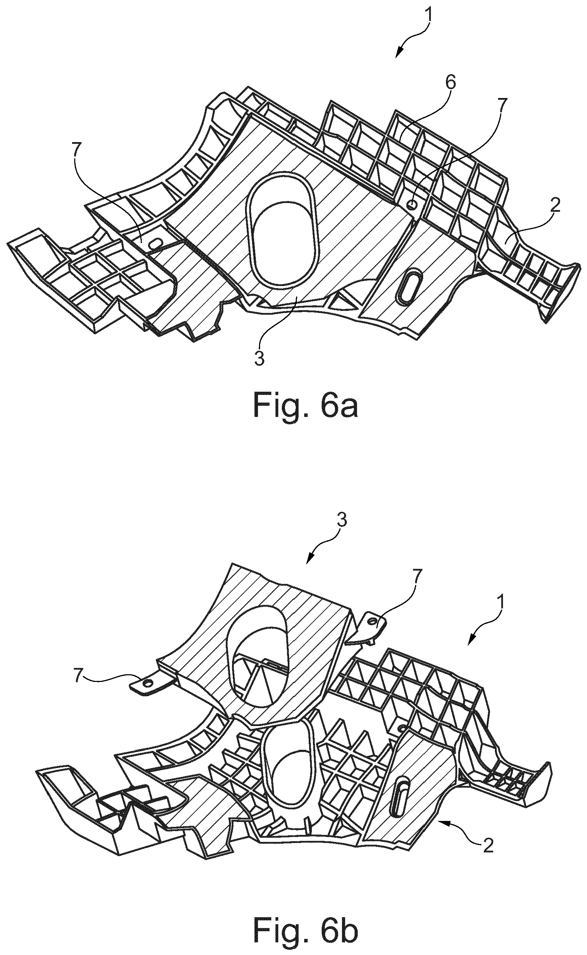

In den Fig. 6a und 6b ist wiederum eine beispielhafte Vorrichtung 1 dargestellt. Dabei zeigt Fig. 6b eine Situation vor einer Verbindung des ersten Trägers 2 und des zweiten Trägers 3, und die Fig. 6a zeigt die Vorrichtung 1 mit miteinander verbundenen Trägern 2, 3. Auch in diesem Beispiel sind die Träger 2, 3 mechanisch miteinander verbunden, indem Kopplungselemente 7 jeweils in entsprechende Kopplungselemente 7 des anderen Trägers 2, 3 eingreifen.

Die Öffnungen 8, 9 der Träger 2, 3 sind dabei so ausgebildet, dass sie in einem verbundenen Zustand der Träger 2, 3 im Wesentlichen übereinander liegen, sodass die Vorrichtung 1 eine Öffnung aufweist, welche sowohl durch den ersten Träger 2 als auch durch den zweiten Träger 3 hindurchreicht.

### Bezugszeichenliste

- 1: Vorrichtung
- 2: erster Träger
- 3: zweiter Träger
- 4: erstes expandierbares Material
- 5: zweites expandierbares Material
- 6: Rippe
- 7: Kopplungselement
- 8: erste Öffnung
- 9: zweite Öffnung
- 10: Karosserie
- 11: Träger
- 12: Strukturelement
- 13: Klebstoff
- 14: Strukturelement
- 15: Winkel
- 16: Verstärkungselement

## Patentansprüche

1. Vorrichtung (1) zur Verstärkung eines Strukturelementes (12, 14) in einem Kraftfahrzeug, umfassend:
einen ersten Träger (2), welcher eine Aussenseite mit einer mehrheitlich geschlossenen Oberfläche hat und eine Innenseite mit einer mehrheitlich durch Rippen (6) definierte Oberfläche hat, wobei auf der geschlossenen Oberfläche der Aussenseite zumindest teilweise ein erstes expandierbares Material (4) angeordnet ist;
einen zweiten Träger (3), welcher eine Aussenseite mit einer mehrheitlich geschlossenen Oberfläche hat und eine Innenseite mit einer mehrheitlich durch Rippen (6) definierte Oberfläche hat, wobei auf der geschlossenen Oberfläche der Aussenseite zumindest teilweise ein zweites expandierbares Material (5) angeordnet ist;
wobei der erste Träger (2) und der zweite Träger (3) derart miteinander verbunden sind, dass die Innenseiten der Träger (2, 3) einander zugewandt sind; und
wobei die Aussenseiten der Träger (2, 3) in einem Verwendungszustand jeweils gegen eine Wand des Strukturelementes (12, 14) gerichtet sind, sodass das erste expandierbare Material (4) und das zweite expandierbare Material (5) nach einer Expansion die Träger (2, 3) mit Wänden des Strukturelements (12, 14) verbinden.

2. Vorrichtung nach Anspruch 1, wobei das zweite expandierbare Material (5) des zweiten Trägers (3) derart in einem Randbereich der Aussenseite angeordnet ist, dass das zweite expandierbare Material (5) bei einer Expansion sowohl den zweiten Träger (3) mit einer Wand des Strukturelementes (12, 14) als auch mit der Innenseite des ersten Trägers (2) verbindet.

3. Vorrichtung nach Anspruch 2, wobei das zweite expandierbare Material (5) im Randbereich der Aussenseite in einer vordefinierten Distanz und im Wesentlichen parallel zu einer Rippe (6) des ersten Trägers (2) angeordnet ist, sodass bei einer Expansion eine längliche Verbindung zwischen erstem und zweitem Träger (2, 3) durch das zweite expandierbare Material (5) entsteht.

4. Vorrichtung nach Anspruch 3, wobei die vordefinierte Distanz zwischen 0.1 mm und 5 mm beträgt.

5. Vorrichtung nach einem der vorhergehenden Ansprüche, wobei der erste Träger (2) grösser ist als der zweite Träger (3).

6. Vorrichtung nach einem der vorhergehenden Ansprüche, wobei eine Fläche der Innenseite des zweiten Trägers (3) zwischen 10 % und 80 % einer Fläche der Innenseite des ersten Trägers (2) beträgt.

7. Vorrichtung nach einem der vorhergehenden Ansprüche, wobei die Aussenseite des ersten Trägers (2) und/oder des zweiten Trägers (3) auf zumindest 70 % eine geschlossene Oberfläche hat.

8. Vorrichtung nach einem der vorhergehenden Ansprüche, wobei die Innenseite des ersten Trägers (2) und/oder des zweiten Trägers (3) auf zumindest 70 % eine durch Rippen (6) definierte Oberfläche hat.

9. Vorrichtung nach einem der vorhergehenden Ansprüche, wobei der erste Träger (2) und der zweite Träger (3) durch zumindest zwei mechanische Verbindungen miteinander verbunden sind, und wobei jeder Träger (2, 3) jeweils zwei Kopplungselemente (7) umfasst, welche mechanisch verbindbar sind mit den Kopplungselementen (7) des jeweils anderen Trägers (2, 3).

10. Vorrichtung nach Anspruch 9, wobei die Kopplungselemente (7) als Clips und Clipöffnungen ausgebildet sind.

11. Vorrichtung nach Anspruch 9 oder 10, wobei die Kopplungselemente (7) am zweiten Träger (3) in einem Randbereich der Innenseite angeordnet sind, und wobei die Kopplungselemente (7) am ersten Träger (2) an dessen Innenseite angeordnet sind.

12. Vorrichtung nach einem der Ansprüche 9 bis 11, wobei die mechanische Verbindung den ersten Träger (2) und den zweiten Träger (3) für eine Montage miteinander fixiert, aber nicht für einen vorgesehenen Lastfall mechanisch miteinander verbindet.

13. Vorrichtung nach einem der vorhergehenden Ansprüche, wobei das erste expandierbare Material (4) und das zweite expandierbare Material (5) dieselbe Zusammensetzung haben.

14. Vorrichtung nach einem der vorhergehenden Ansprüche, wobei das erste expandierbare Material (4) und/oder das zweite expandierbare Material (5) eine Expansionsrate von mehr als 100 % und von weniger als 800 % haben.

15. System eines verstärkten Strukturelements (12, 14) in einem Kraftfahrzeug, das System umfassend:
ein Strukturelement (12, 14);
eine Vorrichtung (1) nach einem der Ansprüche 1 bis 14, wobei die Vorrichtung (1) im Strukturelement (12, 14) angeordnet ist;
wobei das expandierte Material (4, 5) die Träger (2, 3) mit dem Strukturelement (12, 14) und die Träger (2, 3) untereinander verbindet.

## Claims

1. Device (1) for reinforcing a structural element (12, 14) in a motor vehicle, comprising:
a first carrier (2) which has an outer side with a mainly closed surface and an inner side with a surface defined mainly by ribs (6), wherein a first expandable material (4) is disposed at least partially on the closed surface of the outer side;
a second carrier (3) which has an outer side with a mainly closed surface and an inner side with a surface defined mainly by ribs (6), wherein a second expandable material (5) is disposed at least partially on the closed surface of the outer side;
wherein the first carrier (2) and the second carrier (3) are connected to one another in such a manner that the inner sides of the carriers (2, 3) face one another; and wherein the outer sides of the carriers (2, 3) are each directed towards a wall of the structural element (12, 14) in a state of use, such that the first expandable material (4) and the second expandable material (5) upon expansion connect the carriers (2, 3) to walls of the structural element (12, 14).

2. Device according to Claim 1, wherein the second expandable material (5) of the second carrier (3) is disposed in a peripheral region of the outer side in such a manner that the second expandable material (5) upon expansion connects the second carrier (3) both to a wall of the structural element (12, 14) and to the inner side of the first carrier (2).

3. Device according to Claim 2, wherein the second expandable material (5) is disposed in the peripheral region of the outer side at a predefined distance from and substantially parallel to a rib (6) of the first carrier (2), such that, during expansion, an elongate connection is created between the first and the second carrier (2, 3) by the second expandable material (5).

4. Device according to Claim 3, wherein the predefined distance is between 0.1 mm and 5 mm.

5. Device according to one of the preceding claims, wherein the first carrier (2) is larger than the second carrier (3).

6. Device according to one of the preceding claims, wherein an area of the inner side of the second carrier (3) amounts to between 10% and 80% of an area of the inner side of the first carrier (2).

7. Device according to one of the preceding claims, wherein the outer side of the first carrier (2) and/or of the second carrier (3) has a closed surface to an extent of at least 70%.

8. Device according to one of the preceding claims, wherein the inner side of the first carrier (2) and/or of the second carrier (3) has a surface defined by ribs (6) to an extent of at least 70%.

9. Device according to one of the preceding claims, wherein the first carrier (2) and the second carrier (3) are connected to one another by at least two mechanical connections, and wherein each carrier (2, 3) comprises in each case two coupling elements (7) which are mechanically connectable to the coupling elements (7) of the respectively other carrier (2, 3).

10. Device according to Claim 9, wherein the coupling elements (7) are in the form of clips and clip openings.

11. Device according to Claim 9 or 10, wherein the coupling elements (7) are disposed on the second carrier (3) in a peripheral region of the inner side, and wherein the coupling elements (7) are disposed on the first carrier (2) on the inner side thereof.

12. Device according to one of Claims 9 to 11, wherein the mechanical connection fixes the first carrier (2) and the second carrier (3) to one another for assembly but does not connect them mechanically to one another for an intended load case.

13. Device according to one of the preceding claims, wherein the first expandable material (4) and the second expandable material (5) have the same composition.

14. Device according to one of the preceding claims, wherein the first expandable material (4) and/or the second expandable material (5) have an expansion rate of more than 100% and less than 800%.

15. System of a reinforced structural element (12, 14) in a motor vehicle, the system comprising:
a structural element (12, 14);
a device (1) according to one of Claims 1 to 14, wherein the device (1) is disposed in the structural element (12, 14);
wherein the expanded material (4, 5) connects the carriers (2, 3) to the structural element (12, 14) and interconnects the carriers (2, 3).

## Revendications

1. Dispositif (1) de renforcement d'un élément structural (12, 14) dans un véhicule automobile, comprenant :
un premier support (2), qui a un côté extérieur avec une surface majoritairement fermée et un côté intérieur avec une surface majoritairement définie par des nervures (6), un premier matériau expansible (4) étant disposé au moins en partie sur la surface fermée du côté extérieur ;
un second support (3), qui a un côté extérieur avec une surface majoritairement fermée et un côté intérieur avec une surface majoritairement définie par des nervures (6), un second matériau expansible (5) étant disposé au moins en partie sur la surface fermée du côté extérieur ;
le premier support (2) et le second support (3) étant reliés l'un à l'autre de telle manière que les côtés intérieurs des supports (2, 3) sont tournés l'un vers l'autre ; et
les côtés extérieurs des supports (2, 3), dans l'état d'utilisation, étant dirigés chacun contre une paroi de l'élément structural (12, 14), si bien que le premier matériau expansible (4) et le second matériau expansible (5) relient après une expansion les supports (2, 3) aux parois de l'élément structural (12, 14).

2. Dispositif selon la revendication 1, le second matériau expansible (5) du second support (3) étant disposé dans une zone de bord du côté extérieur de telle manière que lors d'une expansion, le second matériau expansible (5) relie à la fois le second support (3) à une paroi de l'élément structural (12, 14) et au côté intérieur du premier support (2).

3. Dispositif selon la revendication 2, le second matériau expansible (5) étant disposé dans la zone de bord du côté extérieur à une distance prédéfinie et sensiblement parallèlement à une nervure (6) du premier support (2), si bien qu'en cas d'expansion, une liaison allongée entre le premier et le second support (2, 3) se forme par le second matériau expansible (5).

4. Dispositif selon la revendication 3, la distance prédéfinie étant comprise entre 0,1 mm et 5 mm.

5. Dispositif selon l'une des revendications précédentes, le premier support (2) étant plus grand que le second support (3).

6. Dispositif selon l'une des revendications précédentes, une surface du côté intérieur du second support (3) étant comprise entre 10 % et 80 % d'une surface du côté intérieur du premier support (2).

7. Dispositif selon l'une des revendications précédentes, le côté extérieur du premier support (2) et/ou du second support (3) ayant une surface fermée sur au moins 70 %.

8. Dispositif selon l'une des revendications précédentes, le côté intérieur du premier support (2) et/ou du second support (3) ayant une surface définie par des nervures (6) sur au moins 70 %.

9. Dispositif selon l'une des revendications précédentes, le premier support (2) et le second support (3) étant reliés l'un à l'autre par au moins deux liaisons mécaniques, et chaque support (2, 3) comprenant chacun deux éléments d'accouplement (7), qui peuvent être reliés mécaniquement aux éléments d'accouplement (7) de l'autre support (2, 3) respectif.

10. Dispositif selon la revendication 9, les éléments d'accouplement (7) étant formés comme des clips et des ouvertures de clip.

11. Dispositif selon la revendication 9 ou 10, les éléments d'accouplement (7) étant disposés sur le second support (3) dans une zone de bord du côté intérieur, et les éléments d'accouplement (7) étant disposés sur le premier support (2) sur son côté intérieur.

12. Dispositif selon l'une des revendications 9 à 11, la liaison mécanique fixant le premier support (2) et le second support (3) pour un montage, mais ne les reliant pas mécaniquement l'un à l'autre dans un cas de charge prévu.

13. Dispositif selon l'une des revendications précédentes, le premier matériau expansible (4) et le second matériau expansible (5) ayant la même composition.

14. Dispositif selon l'une des revendications précédentes, le premier matériau expansible (4) et/ou le second matériau expansible (5) ayant un taux d'expansion de plus de 100 % et de moins de 800 %.

15. Système d'un élément structural (12, 14) renforcé dans un véhicule automobile, le système comprenant :
un élément structural (12, 14) ;
un dispositif (1) selon l'une des revendications 1 à 14, le dispositif (1) étant disposé dans l'élément structural (12, 14) ;
le matériau expansé (4, 5) reliant les supports (2, 3) à l'élément structural (12, 14) et les supports (2, 3) entre eux.
